# EUROPEAN PATENT SPECIFICATION

(11) **EP 0 446 075 B1**
(45) Date of publication and mention of the grant of the patent: **14.09.1994**
(21) Application number: 91301971.7
(22) Date of filing: 08.03.1991
(51) Int. Cl.: H02K 44/06, H02K 44/26

(54) **A converged magnetic flux type electro-magnetic pump**
Elektromagnetische Pumpe mit konvergiertem Magnetfluss
Pompe électromagnétique ayant un flux magnétique convergeant

(30) Priority: 09.03.1990 JP 56331/90
(43) Date of publication of application: 11.09.1991
(73) Proprietor: KANAZAWA UNIVERSITY, Kanazawa City Ishikawa Pref. (JP)
(72) Inventor: Bessho, Kazuo, Kanazawa City, Ishikawa Pref. (JP)
(74) Representative: Godwin, Edgar James

(56) References cited:
- EP-A- 0 383 457
- DE-A- 3 925 926
- US-A- 3 555 474
- US-A- 4 828 459
- SOVIET INVENTIONS ILLUSTRATED, DERWENT PUBLICATIONS LTD., SECTION ELECTRICAL, Week E39, Abstract No. M 8439, X 11, 10.11.1982, & SU-A-865098 (KIRILLOV I R) 15.04.1982

## Description

The present invention relates to an electro-magnetic pump for conveying molten metal through a pipe by electro-magnetically applying a thrust thereon from the surroundings around the pipe, particularly, to a converged magnetic flux type electro-magnetic pump which can powerfully convey molten metal through a pipe applied with a traveling magnetic field which is formed by converging magnetic fluxes induced in the pipe by eddy currents generated by multiphase alternate current exciting coils in metal plates individually inserted between those coils together with magnetic fluxes induced in magnetic material frames surrounding those exciting coils.

In general as to a pump used for conveying molten metal, for instance, high temperature molten metal taken out from a blast furnace, particularly, for circulating molten sodium used as a refrigerant of a high speed breeder reactor, which is noteworthy for an energy source of next generation, a conventional rotary blade type pump is questionable with regard to safety, and hence it is conventionally deemed that an electro-magnetic induction type pump, particularly, a linear induction type electro-magnetic pump is the most suitable therefor. Various forms of pumps of these types have been developed and practically used as those pumps of small capacity. On the other hand, the development of those pumps of large capacity is internationally progressed in force as a pressing problem to be studied immediately before the practical use of the high speed breeder reactor will be realized.

However, in the conventional form of linear induction type electro-magnetic pump, the magnetic flux density of traveling magnetic field generated in the pipe for conveying molten metal so as to apply the thrust thereon is comparatively small, that is, no more than about 3,000 gausses, and hence the output amount of the pump is not sufficient. Consequently, the conventional pump of this type is used only for the comparatively small capacity and can be hardly used for the large capacity.

An object of the present invention is to solve the above mentioned problem and to provide an electro-magnetic pump being capable of powerfully conveying molten metal in a pipe through a simple structure with good efficiency, and hence being suitable, for example, to convey high temperature molten metal taken out from a blast furnace or to circulate a large amount of heat-interchanging molten sodium in a high speed breeder reactor.

An electro-magnetic pump according to the present invention is basically arranged such that exciting coils are alternately stacked with metal plates and are driven by a multi-phase alternate current, so as to induce highly condensed magnetic fluxes in central holes of those metal plates by eddy currents generated in those metal plates and further to efficiently converge magnetic fluxes induced in magnetic material frames surrounding those exciting coils into these central holes, and, as a result, to apply a powerful thrust on molten metal in a non-magnetic pipe passing through those central holes by generating a traveling magnetic field with the resultant highly condensed magnetic fluxes.

In other words, a converged magnetic flux type electro-magnetic pump according to the present invention is featured by comprising a plurality of layers of exciting coils coaxially engaged with each other and wound in the same polarity to each other, a plurality of layers of conductor plates individually inserted between each layers of said exciting coils and provided with radial slits reaching outer peripheries thereof respectively and holes conducted to said radial slits and to each other coaxially in common in central portions thereof and a plurality of substantially U-shaped magnetic material frames surrounding respective outer peripheries of cross-sections of said exciting coils and said conductor plates for forming closed magnetic circuits through said holes, so as to construct a unitary magnetic flux generating element, and further featured by inducing axially traveling magnetic fluxes passing through said holes successively conducted to each other by converging eddy currents generated in said conductor plates by applying multiphase alternate currents through said exciting coils along said radial slits and around said holes and by converging traveling magnetic fluxes induced in the closed magnetic circuits formed of said magnetic material frames and superposed in phase on said traveling magnetic fluxes in said holes, so as to apply an axial thrust on molten metal in a pipe formed of non-magnetic material passing through said holes successively conducted to each other.

As is apparent from the mentioned above, the converged magnetic flux type electro-magnetic pump is arranged by applying the principle of the multilayered eddy current type intense magnetic field generator which has been variously proposed by the present inventor. So that, it is attainable according thereto to readily obtain the traveling magnetic field with very high magnetic flux density and hence to provide the electro-magnetic pump of large capacity which has extremely intense power and sufficient output amount in comparison with the conventional pump of the same type. Consequently, the electro-magnetic pump of the present invention can be widely applied in the technical field of magnetic technology, power magnetics, magnetic material property, nuclear fusion and the like, for instance, as for conveying high temperature molten metal used for magnetic casting and others and as for circulating molten sodium used as a refrigerant for a high speed breeder reactor, and further as for a prospective electro-magnetically driven ship, MHD electric power generation and other.

For the better understanding of the invention, reference is made to the accompanying drawings, in which:
Fig. 1 is a developed perspective view showing an outlined structure of a layered eddy current type coil for generating an AC intense magnetic field on which the present invention is based;
Fig. 2 is a perspective view showing an outlined and partly broken structure of a multilayered eddy current type power-saved AC intense magnetic field generator on which the present invention is based;
Fig. 3 is an elevation showing an example of a spiral coil used for the present invention;
Fig. 4 is an elevation showing an example of a conductor plate for eddy current used for the present invention;
Fig. 5 is an elevation showing an exemplified structure of a unitary magnetic flux generating element according to the present invention;
Fig. 6 is a vertical cross-sectional view showing an exemplified structure of a converged magnetic flux type electro-magnetic pump according to the present invention;
Fig. 7 is a perspective view showing another exemplified structure of the same;
Fig. 8 is a vertical cross-sectional view showing further another exemplified structure of the same;
Fig. 9 is a circuit diagram showing an example of connection for three phase AC voltage driving exciting coils in the same;
Fig. 10 is a diagram showing an example of three phase AC voltage for driving the same;
Fig. 11 is a diagram showing an example of manner of magnetic flux generation effected by three phase AC voltage driving in the same;
Fig. 12 is a diagram showing another example of the same;
Fig. 13 is a diagram showing manners of traveling magnetic field generation and eddy current generation which are effected by three phase AC voltage driving the electro-magnetic pump according to the present invention;
Fig. 14 is a vertical cross-sectional view showing an outlined structure of an annular linear induction type electro-magnetic pump;
Fig. 15 is a vertical cross-sectional view showing manner of operation of the same;
Fig. 16 is a vertical cross-sectional view showing a manner of operation of the electro-magnetic pump according to the present invention; and
Fig. 17 is a characteristic curve showing the efficiency of thrust generation for conveying molten metal in comparison between the conventional electro-magnetic pump and the electro-magnetic pump according to the present invention.

Through different views of the drawings,
- 1 ...: spiral coil
- 1a ...: exciting coil
- 2 ...: conductor plate for eddy current
- 3 ...: central hole
- 4 ...: slit
- 5 ...: space
- 6 ...: magnetic material frame
- 7 ...: pipe
- 8 ...: cylindrical magnetic core
- 9 ...: gap
- 10 ...: magnetic flux intensity distribution
- 11 ...: eddy current
- 12 ...: thrust
- 13 ...: effective magnetic flux
- 14 ...: leakage magnetic flux
- 15 ...: characteristic curve of thrust generation efficiency of electro-magnetic pump of the present invention
- 16 ...: characteristic curve of thrust generation efficiency of conventional electro-magnetic pump

The present invention will be described in detail as to embodiments by referring to accompanying drawings hereinafter.

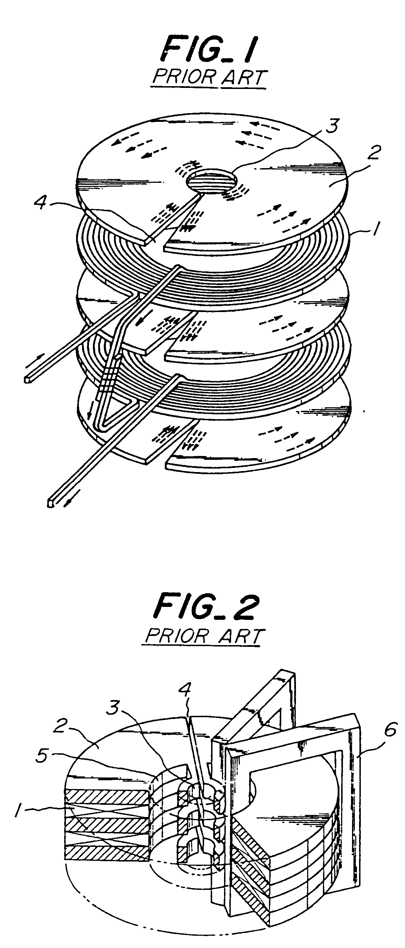

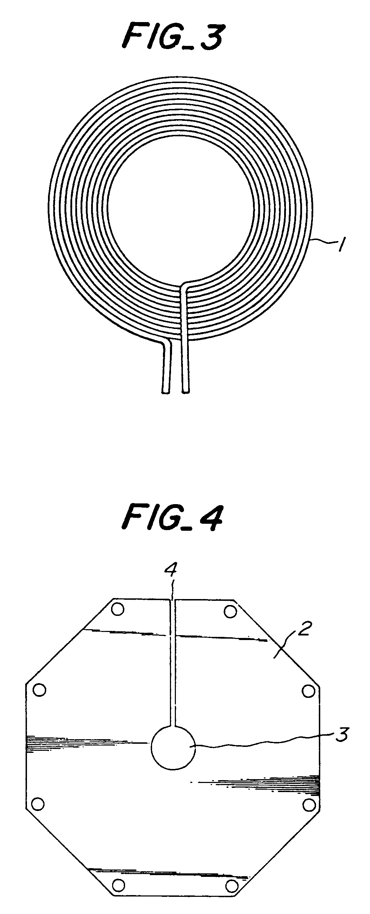

First, an axially developed perspective view of "a layered eddy current type coil for AC intense magnetic field" as described in Japanese Patent application No. 63-196,072 specification which has been proposed by the present inventor and on which the electro-magnetic pump of the present invention is based is shown in Fig. 1, while a partially broken perspective view of "a multi-layered eddy current type power-saved AC intense magnetic field generator" as described in Japanese Patent Application No. 1-19,431 specification and EP-A-0 383 457 is shown in Fig. 2.

The layered eddy current type coil as shown in Fig. 1 is arranged such that spiral coils 1 and circular conductor plates 2 individually having a central hole 3 and a fan-shaped slit 4 radially extending therefrom are alternately stacked, and, when spiral coils 1 successively conducted to each other are excited by applying AC voltage thereon, eddy currents are generated in the peripheral portions of circular conductor plates 2 in the peripheral direction, and further the direction of those eddy currents is turned along the slits 4 in the radial direction, and hence those eddy currents are converged around the central holes 3 and, as a result, an AC intense magnetic field in the axial direction is continuously generated in the central holes 3.

On the other hand, the power-saved AC intense magnetic field generator as shown in Fig. 2 is arranged such that spiral coils 1 and circular conductor plates 2 individually having a central hole 3 and a fan-shaped slit 4 radially extending therefrom are alternately stacked, and further portions surrounding the central holes 3 of the circular conductor plates 2, except those parts in which slits 4 are formed, are hollowed out, so as to form substantially annular spaces 5, through which frame-shaped iron cores 6 are positioned with equal spaces and hence provide closed magnetic circuits which surround radial cross-sections of the alternately stacked structure of spiral coils 1 and circular conductor plates 2 and hence cross those spiral coils 1 with a result that the exciting impedance is increased, and hence the input current thereof is reduced, so as to improve the structure as shown in Fig. 1 by loading these frame-shaped iron cores 6 for facilitating the generation of the intense magnetic field in the central holes with the small electric power.

The converged magnetic flux type electro-magnetic pump of the present invention is provided by improving the aforesaid AC intense magnetic field generator, particularly, by making the most of the feature of the AC intense magnetic field generator as shown in Fig. 2, so as to make it fit for conveying high temperature molten metal.

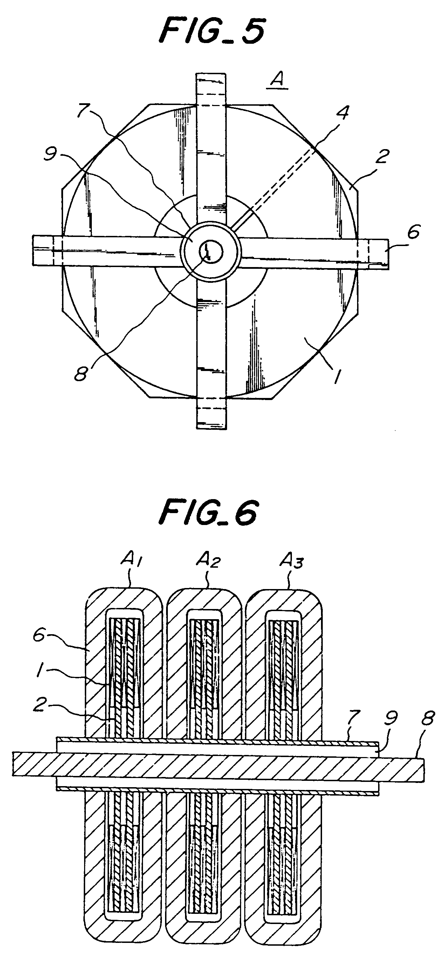

In the converged magnetic flux type electro-magnetic pump of the present invention, spiral coils 1 as shown in Fig. 3 and conductor plates 2 for eddy current, which is circular as conventional or octagonal as shown in Fig. 4 and which are individually provided with holes 3 in central portions and slits 4 radially extending from holes 3 to peripheries, are alternately stacked with each other so as to form alternate stack structures, peripheries of which are surrounded by magnetic material frames 6 consisting, for instance, of layered iron cores, as shown in the elevation of Fig. 5 and as shown in the cross-sectional view of Fig. 6, so as to form unitary magnetic flux generating element A, required numbers of which are axially arranged to each other and in which central holes 3 of conductor plates 2 for eddy current are conducted to each other and are fully inserted with a pipe 7 which consists of wiry material such as stainless steel or strengthened ceramics and hence are endurable for conveying high temperature molten metal under high pressure and in which a cylindrical magnetic core 8 of ferromagnetic material is inserted and held on the center axis with a gap 9 provided between the pipe 7 and the magnetic core 8, which gap is wide enough to convey molten metal. Fig. 5 shows the outward elevation of the unitary magnetic flux generating element A, while Fig. 6 shows the axial cross section of three unitary magnetic flux generating elements A₁ to A₃ axially arranged close to each other.

In this connection, the magnetic material frame 6 surrounding the alternate stack structure of the spiral coil 1 and the conductor plate 2 is basically formed in substantial U shape as shown in Fig. 6. However, it is suitable for a high density magnetic flux distribution as mentioned later in the pipe for conveying molten metal, to make the tops of the U-shaped frame 6 as extended in contact with the pipe 7 and as formed in a shape such as the undesired leakage of magnetic flux is reduced. It is shown in Fig. 6 that the magnetic material frames 6 of each unitary elements A₁ to A₃ are individually formed in U-shape. However, as long as the tops of the U-shaped frame 6 are formed as mentioned above, those magnetic material frames 6 of each unitary elements A₁ to A₃ can be unified into one body.

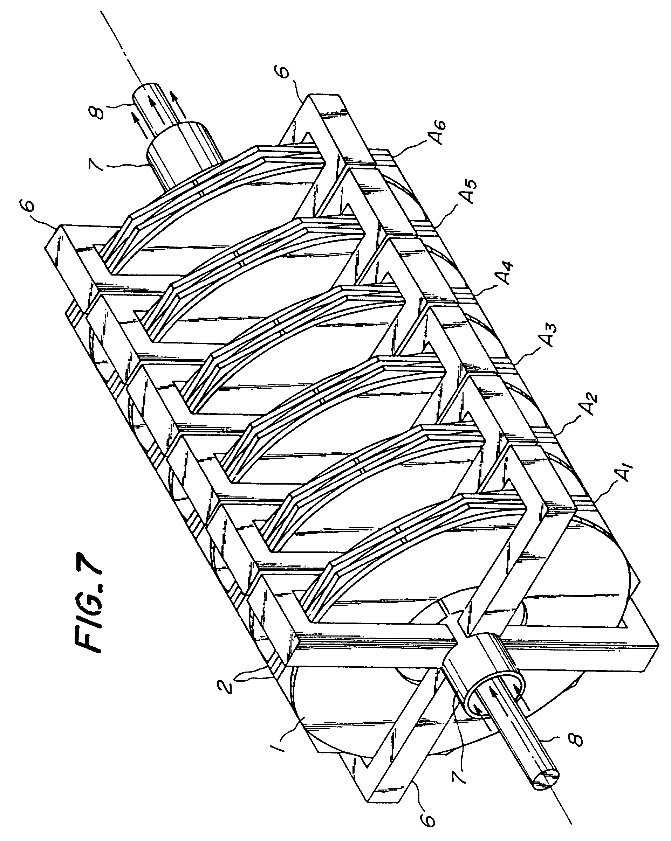

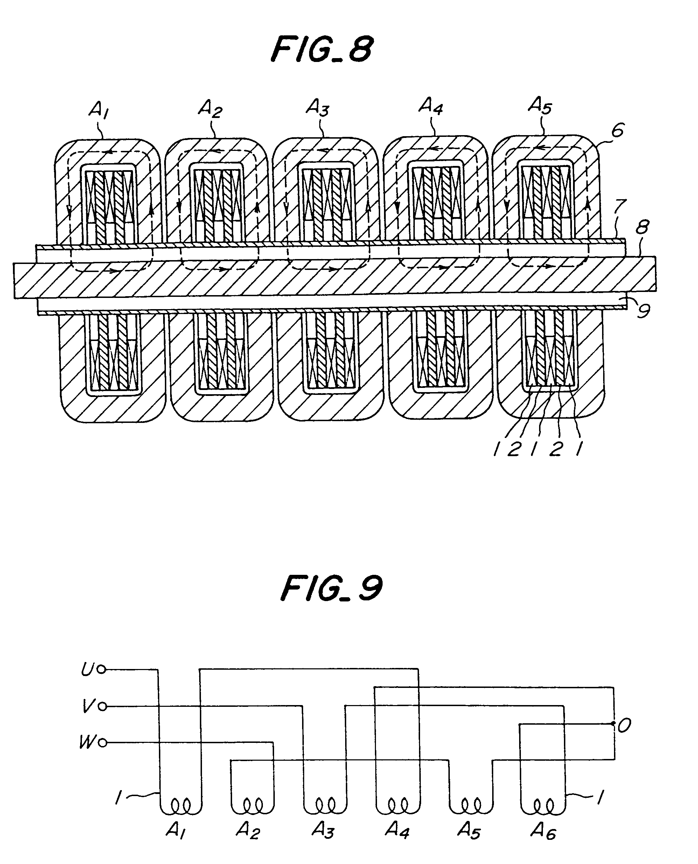

Next, Fig. 7 shows an outward perspective view of six unitary magnetic flux generating elements A₁ to A₆ axially arranged close to each other, while Fig. 8 is an axial cross-sectional view of five unitary magnetic flux generating elements A₁ to A₅ axially arranged close to each other as shown together with magnetic fluxes induced in the closed magnetic circuit as shown by broken lines.

Plural units of magnetic flux generating elements A as formed as mentioned above are successively arranged and plural spiral coils 1 of each unitary element A are successively connected in the same polarity and further each group of coils 1 of successive unitary elements A are appropriately combined with each other and driven by applying thereon, for instance, three phase AC voltage. In this situation, magnetic fluxes induced by eddy currents flowing in conductor plates 2 for eddy current and magnetic fluxes induced in closed magnetic circuits formed of magnetic material frames 6 by spiral coils 1 are axially converged in the pipe 7, particularly, in the cylindrical magnetic core 8 inserted in the pipe 7, and hence magnetic fluxes in principally radial direction are converged in the cylindrical gap 9 between the pipe 7 and the cylindrical magnetic core 8 individually at each unitary element A, so that converged magnetic flux densities at each unitary element A travel in the axial direction according to a traveling magnetic field in which the sinusoidal variation of intensity shifts in the axial direction in response to the phase shift of the applied three phase AC voltage. As a result, molten metal is conveyed in the pipe 7 under the axial thrust applied thereon by the interaction between the above traveling magnetic field and circumferential direction eddy currents induced within molten metal in the cylindrical gap 9 and hence the magnetic flux generating elements successively arranged as mentioned above are operated as an electro-magnetic pump.

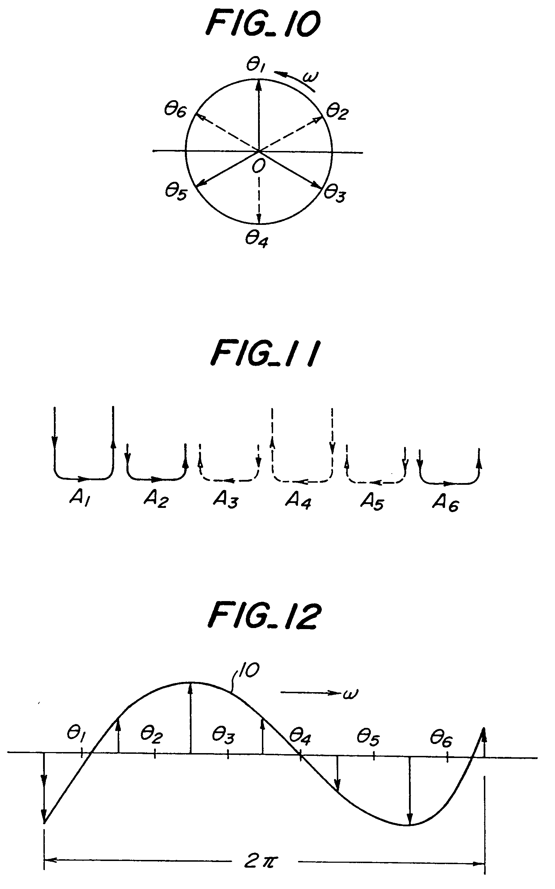

In other words, in those magnetic flux generating elements successively arranged as mentioned above, each groups of spiral coils 1 in the successive unitary elements A₁ to A₆ are connected to each other under the appropriate combination thereof, for instance, as shown in Fig. 9 and are excited by applying thereon three phase AC voltage U, V, W, phases Q₁ to Q₆ of which shift at an angular velocity as shown in Fig. 10. In this situation, AC magnetic fluxes which present phases and intensities as shown in Fig. 11 corresponding to successive unitary elements A₁ to A₆ are induced in the closed magnetic circuit composed through the gap 9 by the magnetic material frame 6 surrounding each groups of spiral coils 1 in each unitary elements A₁ to A₆ and the cylindrical magnetic core 8 in the pipe 7. In connection with Fig. 11, magnetic fluxes as shown by dotted lines corresponding to the unitary elements A₃, A₄, A₅ respectively are induced in the direction opposite to the solid lines corresponding to the unitary elements A₁, A₂, A₆ respectively.

As a result of the mentioned above, the axial direction intensity distribution 10 of the magnetic fluxes induced principally in the radial direction in the cylindrical gap 9 between both of top portions of the U-shaped magnetic material frames in the successive unitary elements A₁ to A₆ and the cylindrical magnetic core 8 becomes sinusoidal as shown in Fig. 12. This sinusoidal distribution of the magnetic flux intensity travels in the axial direction with the angular velocity ω in response to the phase shift of the applied three phase AC voltage, so as to form the traveling magnetic field. In Figs. 9, 11 and 12, the situation where the groups of coils 1 in each unitary elements are connected in combination with each other such as positive and negative magnetic poles are formed by six units of magnetic flux generating elements, so that the traveling magnetic field as formed as mentioned above travels in the axial direction by the distance corresponding to six unitary elements within the one cycle interval of AC voltage.

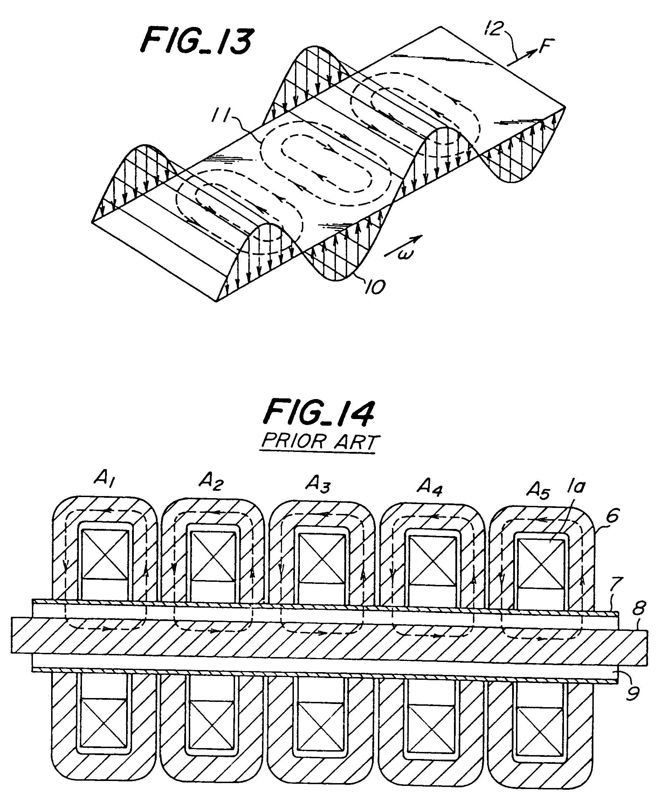

Fig. 13 shows the manner of generation of the thrust applied on molten metal in the gap by the above mentioned traveling magnetic field 10, by which a circumferential direction eddy current 11 is generated in molten metal in the cylindrical gap 9. As a result of the interaction between the eddy current 11 and the traveling magnetic field 10, a thrust 12 along the traveling direction of the traveling magnetic field 10 is applied on molten metal and hence those magnetic flux generating elements act as an electro-magnetic pump.

In comparison between the above mentioned electro-magnetic pump according to the present invention and the aforesaid conventional linear induction type electro-magnetic pump, the latter as conventionally regarded as operated with the highest efficiency is formed of the close arrangement in the axial direction of plural units of magnetic flux generating elements A₁ to A₆ as shown in Fig. 14, similarly as the former as shown in Fig. 8, with regard to outlined structure, and further in each unitary element of the latter also, a cylindrical magnetic core 8 is inserted into a central hole 7 of a U-shaped magnetic material frame 6 which surrounds an exciting coil 1a with a cylindrical gap 9 provided around the cylindrical magnetic core 8. However, as is clearly different from the electro-magnetic pump of the present invention in which, as shown in Fig. 8, the magnetic material frame 6 surrounds the alternately stacked structure of the spiral coils 1 and the conductor plates 2 for eddy current, in the conventional electro-magnetic pump as shown in Fig. 14, only the exciting coil 1a is surrounded by the magnetic material frame 6 and further the exciting coil 1a is apart from the pipe 7 in order to avoid the influence of the high temperature of molten metal in the pipe 7. So that nothing which disturbs at least the passing of magnetic fluxes exists in a wide space between the exciting coil 1a and the pipe 7.

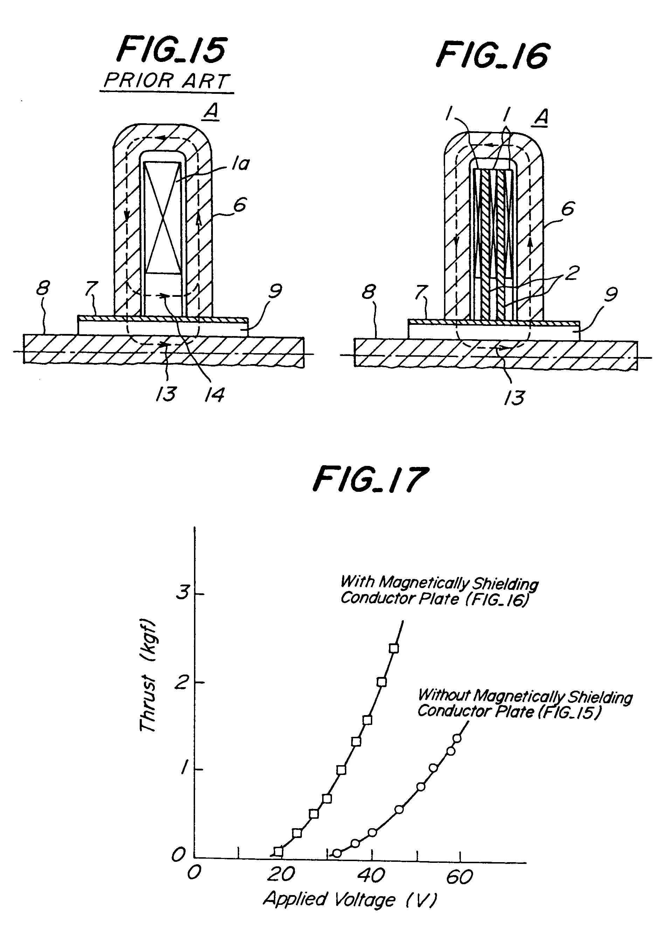

In the conventional linear induction type electro-magnetic pump, as shown in Fig. 15, among magnetic fluxes induced in the magnetic material frame 6 by the excitation effected by coils 1a in each unitary elements, leakage magnetic fluxes 14 passing through the above-mentioned spaces inside the exciting coils 1a are extremely increased, while effective magnetic fluxes 13 which pass through the cylindrical magnetic core 8 in the pipe 7 from both of top portions of the magnetic material frame 6 further through the gap 9 and hence principally contribute to the application of the thrust in the axial direction on molten metal in the gap 9 by the interaction with eddy currents induced therein, that is, magnetic flux components perpendicularly crossing the axial direction are decreased by the increase of the leakage magnetic fluxes, and, as a result, the efficiency of generation of the thrust applied on molten metal is extremely lowered.

On the contrary, in the electro-magnetic pump according to the present invention, as shown in Fig. 16 in comparison with Fig. 15, conductor plates 2 for eddy current which are individually inserted between each layers of spiral coils 1 are extended until these plates 2 contact with the pipe 7, so as to act as magnetically shielding plates against the generation of aforesaid leakage magnetic fluxes. So that, the leakage magnetic fluxes are extremely reduced in comparison with the conventional pump, and, as a result, the effective magnetic fluxes 13, which pass through the cylindrical magnetic core 8 and further through the gap 9 and hence contribute to the generation of the thrust applied on molten metal, together with the magnetic fluxes induced by eddy currents generated in conductor plates 2 properly according to the present invention, are extremely increased in comparison with those as conventional and hence the efficiency of generation of the thrust in the axial direction is remarkably improved.

Fig. 17 shows the results of the practical measurement of the efficiency of generation of the thrust in the axial direction under the comparison between the conventional type electro-magnetic pump and the converged magnetic flux type electro-magnetic pump of the present invention under the same standards, that is further concretely, between with and without the conductor plate for eddy current and further for magnetic shield against the generation of leakage magnetic flux. As is apparent from the comparison as shown in Fig. 17 between the characteristics 15 of the thrust generated by the voltage applied on the exciting coil in the electro-magnetic pump provided with the conductor plate according to the present invention and the similar characteristics 16 obtained in the conventional electro-magnetic pump provided without any conductor plate, the efficiency of generation of the thrust in the electro-magnetic pump of the present invention is remarkably improved in comparison with the same of the conventional electro-magnetic pump.

Further as is apparent from the above description, according to the present invention, the basic principle of the eddy current type AC intense magnetic field generator previously proposed by the present inventor is skillfully applied on the electro-magnetic pump for conveying high temperature molten metal, and, as a result, the production of the large-scale and large-capacity electro-magnetic pump of this kind, which is hardly produced by employing the conventional pump of this kind, is facilitated. The electro-magnetic pump of the present invention is based on the alternately layered structure of the spiral coil and the conductor plate for eddy current provided with the slit radially extended from the central hole to the periphery and the magnetic material frame surrounding this layered structure.

According to the present invention, the following remarkable effects can be obtained on the basis of the above-mentioned basic structure.
(1) The large exciting current can be obtained by the applied low voltage required for generating the intense magnetic field.
(2) The eddy current converged around the central hole of the conductor plate for eddy current can be obtained and the conductor plate presents the shielding effect against the leakage magnetic flux from the magnetic material frame, and, as a result, the effective magnetic flux which passes through the cylindrical magnetic core and further through the gap formed in the pipe for conveying molten metal and hence contributes to the generation of the thrust applied on molten metal is extremely increased in comparison with the same in the conventional pump of this kind.
(3) The aforesaid effect of increased effective magnetic flux is particularly remarkably obtained in the case that the inside diameter of the spiral exciting coil is extremely larger than the outside diameter of the pipe for conveying high temperature molten metal, and, as a result, the heat conduction from the high temperature pipe can be readily prevented by widening the space between the exciting coil and the high temperature pipe. In this connection, according to the principle of operation, the inside diameter of the central hole is substantially the same to the outside diameter of the pipe. However, any trouble does not occur on this condition, because the difficulty of insulation is negligible

## Claims

1. A converged magnetic flux type electro-magnetic pump comprising a plurality of layers of exciting coils (1) which are coaxial with each other and wound in the same polarity as each other, a plurality of layers of conductor plates (2) individually inserted between adjacent layers of the exciting coils (1) and provided respectively with radial slits (4) reaching outer peripheries thereof and with holes (3) in central portions thereof, the holes (3) being coaxial and communicating with the slits (4), and a plurality of substantially U-shaped magnetic material frames (6) surrounding respective outer peripheries of cross-sections of the exciting coils (1) and conductor plates (2), for forming closed magnetic circuits through the holes (3), so as to constitute a unitary magnetic flux generating element (A), whereby axially traveling magnetic fluxes passing through the successive holes (3) are induced by converging eddy currents generated in the conductor plates (2) by multiphase alternating currents applied through the exciting coils (1) along the radial slits (4) and around the holes (3) and converging traveling magnetic fluxes are induced in the closed magnetic circuits constituted by the magnetic material frames (6) and superposed in phase on the traveling magnetic fluxes in the holes (3), so as to be capable of applying an axial thrust on molten metal in a pipe (7) formed of non-magnetic material passing through the holes (3).

2. An electro-magnetic pump as claimed in claim 1, in which at least one cylindrical core (8) of magnetic material is provided in the non-magnetic pipe (7), so as to successively form respective parts of the closed magnetic circuits.

3. An electro-magnetic pump as claimed in claim 1 or 2, in which a plurality of the said unitary magnetic flux generating elements (A₁,A₂,...) are arranged coaxially in sequence.

## Patentansprüche

1. Elektromagnetische Pumpe mit konvergiertem Magnetfluß mit einer Anzahl Schichten von Erregerspulen (1), die koaxial (zueinander) und alle mit der gleichen Polarität gewickelt sind, mit einer Anzahl Schichten aus Leiterplatten (2), die einzeln zwischen benachbarten Schichten der Erregerspulen (1) eingefügt und jeweils mit radialen, ihre äußeren Ränder erreichenden Schlitzen (4) und mit Löchern (3) in ihren mittigen Bereichen versehen sind, wobei die Löcher (3) koaxial und mit den Schlitzen (4) verbunden sind, und mit einer Anzahl im wesentlichen U-förmiger, jeweilige äußere Ränder von Querschnitten der Erregerspulen (1) und Leiterplatten (2) umgebender Magnetmaterialrahmen (6) zum Ausbilden geschlossener magnetischer Kreise durch die Löcher (3), um ein magnetflußerzeugendes Einheitselement (A) zu bilden, wodurch axial wandernde, durch die aufeinanderfolgenden Löcher (3) verlaufende Magnetflüsse von in den Leiterplatten (2) von Mehrphasenwechselströmen, die durch die Erregerspulen (1) entlang den radialen Schlitzen (4) und um die Löcher (3) herum angelegt sind, erzeugten konvergierenden Wirbelströmen induziert werden und konvergierende wandernde Magnetflüsse in den durch die Magnetmaterialrahmen (6) gebildeten geschlossenen magnetischen Kreisen induziert und den wandernden Magnetflüssen in den Löchern (3) in Phase überlagert werden, um in der Lage zu sein, eine axiale Schubkraft auf geschmolzenes Metall in einem aus nichtmagnetischem Material gebildeten und durch die Löcher (3) hindurchführenden Rohr (7) auszuüben.

2. Elektromagnetische Pumpe nach Anspruch 1, in der in dem nicht-magnetischen Rohr (7) zumindest ein zylindrischer Kern (8) aus magnetischem Material vorgesehen ist, um sich einreihend entsprechende Teile der geschlossenen magnetischen Kreise zu bilden.

3. Elektromagnetische Pumpe nach Anspruch 1 oder 2, in der eine Anzahl der magnetflußerzeugenden Einheitselemente (A₁, A₂, ...) koaxial in Folge angeordnet sind.

## Revendications

1. Pompe électromagnétique du type à flux magnétique convergent, comprenant plusieurs couches de bobines d'excitation (1) disposées coaxialement les unes par rapport aux autres et bobinées avec la même polarité les unes par rapport aux autres, plusieurs couches de plaques conductrices (2) insérées séparément entre les couches adjacentes de bobines d'excitation (1) et comportant respectivement des fentes radiales (4) atteignant les périphéries extérieures de celles-ci et des trous (3) dans la partie centrale de celles-ci, les trous (3) étant coaxiaux et communiquant avec les fentes (4) et plusieurs cadres en matériau magnétique (6) essentiellement en forme de U entourant les périphéries extérieures correspondantes des coupes transversales des bobines d'excitation (1) et les plaques conductrices (2) pour former des circuits magnétiques fermés à travers les trous (3), de façon à constituer un élément unitaire (A) produisant un flux magnétique, tandis que les flux magnétiques se déplaçant dans le sens axial passant à travers les trous successifs (3) sont induits par les courants de Foucault convergents créés dans les plaques conductrices (2) par les courants alternatifs multiphasés appliqués aux bobines d'excitation (1) par les fentes radiales (4) et autour des trous (3) et les flux magnétiques mobiles convergents sont induits dans les circuits magnétiques fermés constitués par les cadres en matériau magnétique (6) et superposés en phase aux flux magnétiques mobiles dans les trous (3), de façon à être capables d'appliquer une poussée axiale au métal fondu dans un tuyau (7) formé d'un matériau non magnétique traversant les trous (3).

2. Pompe électromagnétique selon la revendication 1, dans laquelle au moins un noyau cylindrique (8) en matériau magnétique est disposé dans le tuyau non magnétique (7), de façon à former successivement les parties corespondantes des circuits magnétiques fermés.

3. Pompe électromagnétique selon la revendication 1 ou 2, dans laquelle plusieurs desdits éléments unitaires (A₁, A₂, ...) produisant un flux magnétique sont disposés successivement de manière coaxiale.
